# EUROPÄISCHE PATENTANMELDUNG

(11) **EP 0 950 831 A2**
(43) Veröffentlichungstag der Anmeldung: **20.10.1999**
(21) Anmeldenummer: 99106418.9
(22) Anmeldetag: 27.03.1999
(51) Int. Cl.: F16G 11/06

(54) **Seilklemme**

(30) Priorität: 16.04.1998 DE 19816820
(71) Anmelder: Werner sobek Ingenieure GmbH, 70597 Stuttgart (DE)
(72) Erfinder: Sobek, Werner, Prof. Dr., 70180 Stuttgart (DE); Linder, Josef, Dipl.-Ing.(FH), 72364 Obernheim (DE)
(74) Vertreter: Dreiss, Fuhlendorf, Steimle & Becker, Patentanwälte

(57) **Zusammenfassung**

Eine Seilklemme besteht aus zwei Seilklemmenschalen (1, 2), zwei Kugelhalbschalen (17, 18) sowie Klemmschrauben (20). Die Kugelhalbschalen passen in halbkugelförmige Ausrundungen (10) der Seilklemmenschalen und bilden ausrichtbare Klemmbacken für ein Tragseil.

## Beschreibung

Die vorliegende Erfindung betrifft eine Seilklemme für die Verbindung eines Zuggliedes mit einer vorgegebenen Stelle eines Seiles nach dem Oberbegriff des Anspruchs 1.

Über die Endbeschläge von Zugelementen werden hohe Kräfte in anschließende Bauteile eingeleitet. Bei üblichen Konstruktionen handelt es sich dabei im allgemeinen um Zuggliedendbeschläge, die an biegesteifen Augenstäben angeschlossen werden. Bei typischen Seilbauwerken, wie Seilnetzen, Membranbauwerken usw., werden die Endbeschläge jedoch oft mittels Seilklemmen an biegeweiche Tragseile angeschlossen.

Üblicherweise besteht solch eine Seilklemme aus zwei länglichen, gegenüberliegenden Seilklemmschalen, die durch Schraubenbolzen miteinander verbunden sind. In der Nähe des einen Endes der Klemme weisen die Seilklemmschalen auf den gegenüberliegenden Innenseiten halbzylindrische Ausschnitte auf, welche das Tragseil aufnehmen. Durch Zusammenschrauben der zwei Seilklemmschalen entsteht eine starre Verbindung zwischen Tragseil und Seilklemme. Am anderen Ende der Seilklemme befindet sich eine Schwenklagerung, die z. B. durch einen Bolzen gebildet wird, mit dem das Zugglied über eine Öse schwenkbar im Eingriff ist (DE 29 27 085 A1).

Wenn der Kraftangriffswinkel des angegriffenen Seiles von der Normalen abweicht, erzeugt der Endbeschlag über eine starre Seilklemme eine Momentenbeanspruchung auf das Tragseil. Diese verursacht im Tragseil ungewollte lokale Spannungen, denen sich das Tragseil durch entsprechende Verformungen zu entziehen versucht. In besonders extremen Fälle entstehen starke Scherbeanspruchungen, die die Dauerstandfestigkeit des Tragseiles beeinträchtigen.

Um diese Nachteile zu beseitigen, wurde schon eine Seilklemme der eingangs genannten Art vorgeschlagen, mit zwei flanschartigen Seilklemmbacken, die um das Seil gelegt werden und mittels vier Schraubenbolzen mit Muttern zusammengeschraubt werden. Die Seilklemmbacken weisen jeweils axiale Gewindebohrungen auf und sind zwischen die einen Enden der Seilklemmschalen eingebracht und, über entsprechende Bohrungen der Schalen, in verschiedenen Winkeln mittels zweier Kopfschrauben festschraubbar gehalten. Um genügend Platz für die Schraubenbolzenköpfe und die Gewindebohrungen der Seilklemmbacken zu bieten, besitzen die einen Enden der gegenüberliegenden Seilklemmschalen einen erheblichen Abstand voneinander. Die Sicherheit dieser Seilklemme ist unbefriedigend, weil das in den Seilklemmbacken eingeklemmte Seil konstruktionsbedingt nur durch die zwei äußeren Kopfschrauben mit dem Zugglied zusammengehalten wird und diese zwei Kopfschrauben gleichzeitig das Festhalten der Seilklemmbacken und das Einstellen verschiedener Winkel gewährleisten müssen. Außerdem verhindern die Seilklemmschalen eine einfache Handhabung der von ihnen überdeckten Schraubbolzen der Seilklemmbacken beim Ausrichten der Seilverbindungen unter Last.

Aufgabe der Erfindung ist es eine kompakte und sichere Seilklemme zu schaffen, die nach dem Ausrichten der Seilverbindung in einfacher Weise festgezogen werden kann.

Diese Aufgabe wird bei einer Seilklemme der eingangs genannten Art erfindungsgemäß durch die im Anspruch 1 angegebenen Merkmale gelöst.

Dank der Kugellagerung der Seilklemmbacken in den Seilklemmschalen sind die Seilklemmbacken innerhalb der Seilklemme in alle Richtungen stufenlos ausrichtbar. Wenn das Seil in den Seilklemmbacken und diese in den Seilklemmschalen eingelegt und durch Voranziehen von Schrauben reibschlüssig gehalten sind, sind Seil und Seilklemme relativ zueinander und stufenlos einstellbar bzw. ausrichtbar. Die Grenzen dieser Einstellbarkeit werden nur durch die Innenkontur der Seilklemmschalen bestimmt. Mit dem endgültigen Festziehen der Schrauben ist die Seilklemme in kraftoptimaler Ausrichtung sicher und fest positioniert.

Vorteilhafte Weiterbildungen der erfindungsgemäßen Seilklemme ergeben sich aus den Unteransprüchen.

Die erfindungsgemäße Seilklemme wird nun anhand eines Ausführungsbeispiels unter Bezugnahme der beigefügten Zeichnungen näher erläutert. Es zeigen:
- Figur 1: eine Draufansicht einer Seilklemme mit eingeklemmtem Seil in einer relativ zur Seilklemme geneigten Position gemäß einem bevorzugten Ausführungsbeispiel vorliegender Erfindung,
- Figur 2: eine Seitenansicht der Seilklemme nach Figur 1, wobei das geschnitten dargestellte Seil in einer normalen Position gegenüber der Seilklemme ist,
- Figuren 3(a) und 3(b): eine Seiten- bzw. Innenansicht einer der Seilklemmschalen und

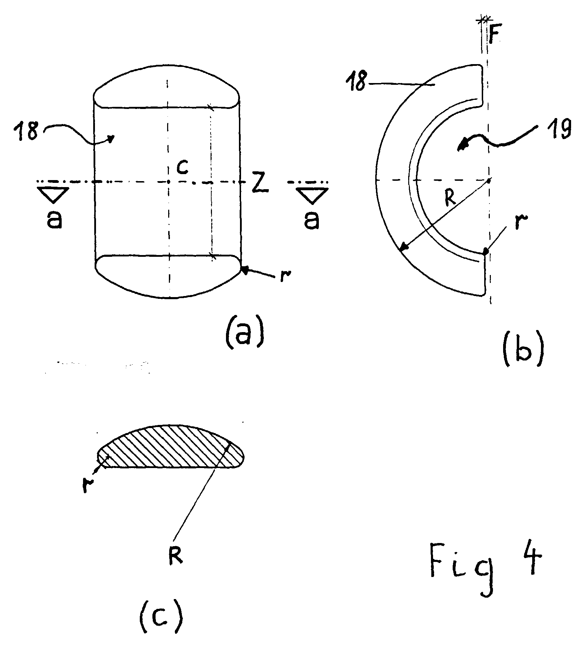

- Figuren 4(a),4(b) und 4(c): eine Innenansicht bzw. Seitenansicht bzw. einen Schnitt längs der Linie a-a der Figur 4a.

Die Seilklemme besitzt zwei Seilklemmschalen 1, 2, die in der Ausführungsform identisch zueinander sind und auf beiden Seiten einer Symmetrieebene E sich gegenüberliegen. Jede Schale hat eine allgemein längliche Form. Nahe des sich laschenartig erstreckenden unteren Ende 3, 4 weist jede Schale eine Bohrung 5 auf. In die gegenüberliegenden Bohrungen paßt ein Bolzen 6. Der Bolzen 6 liegt auf der einen Schale 1 durch seinen Kopf auf. Seine Länge reicht bis zur entgegengesetzten äußeren Fläche der zweiten Seilklemmschale 2. Dort ist eine Scheibe 7 mittels einer (nicht gezeigten) Senkschraube auf das Ende des Bolzens 6 befestigt. Der Bolzen 6 mit Scheibe 7 bildet so eine Schwenkachse. Um diese Schwenkachse ist ein Zuggliedendbeschlag 8 zwischen den Laschen 3, 4 gelagert. Es kann sich hier um ein Überfitting für ein Feldseil handeln. Es kann auch ein Kauschenspleiß mit Formspahlkausche (DIN 3090) oder mit Vollkausche (DIN 3091) sein.

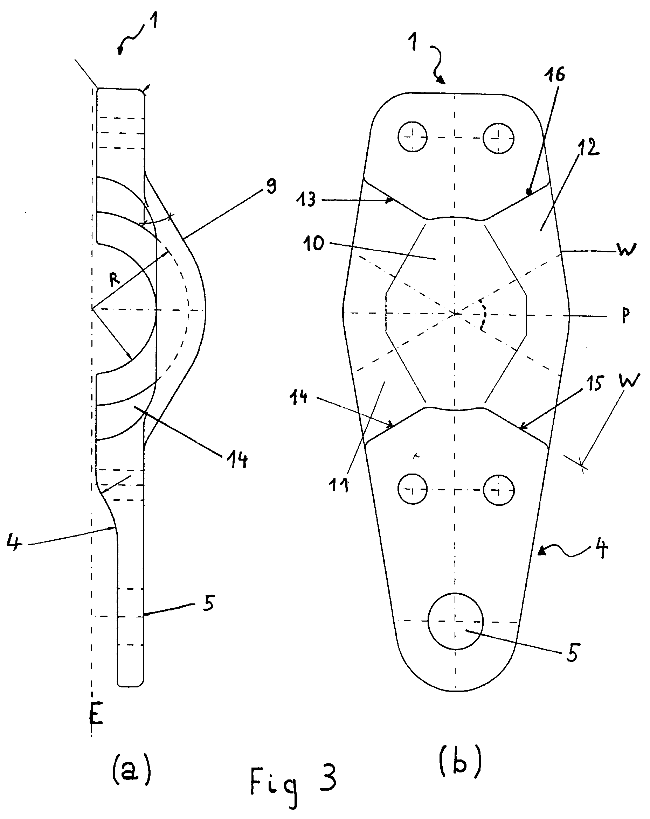

Im oberen Teil ist jede Schale 1, 2 nach außen bauchig aufgetrieben. Auf der inneren Seite des Bauches 9 weist jede Schale 1, 2 eine kugelkappenförmige Aussparung 10 auf. Diese sphärische Aussparung bildet ein Kugellager. Links und rechts dieser Aussparung 10 ist die Seilklemmschale 1, 2 weiter ausgenommen. Die Tiefe der Seitenausnehmungen 11, 12 entspricht wenigstens dem Radius des Seiles S. Die Breite der Ausnehmungen 11, 12 ist wesentlich größer als der Durchmesser des Seiles, damit die Seilklemme in ihrer Symmetrieebene E eine Drehbewegung relativ zum Seil S durchführen kann. Wie aus der Figur 3(b) ersichtlich ist, ist die Breite der Ausnehmungen 11, 12 ausreichend, um eine stufenlose Drehung der Seilklemme in ihrer mittigen Ebene E gegenüber dem eingelegten Seil von einer mittleren Position P bis zu einem vorgegebenen Winkel W, beispielsweise von 30°, zu erlauben. Die Ränder 13, 14, 15, 16 der Ausnehmungen 11, 12 bilden Anschlagsflächen. Wie aus Figur 3(b) ersichtlich ist, sind es schräge Ebenen, deren Öffnungswinkel, d. h. deren Winkel zur mittleren Seilposition in der Seilklemme mit dem maximalen Drehungswinkel W, im vorliegenden Falle 30°, gleich ist. Die Anschlagsflächen können ebenfalls kreisförmig abgerundet sein. Der Winkel W kann aber auch größer sein.

Vorteilhafterweise sind alle Kanten der Innenkontur, mit denen das Seil in Berührung kommen könnte, abgerundet, so z. B. mit einem Abrundungsradius von 5 mm. Die Kanten der Außenkontur der Schalen können ebenfalls abgerundet sein.

In den kugelkappen bzw. kugelkalottenförmigen Aussparungen 10 der Seilklemmschalen 1, 2 lagern zwei Kugelhalbschalen 17, 18 als Seilklemmbacken, deren Radius R dem Biegungshalbmesser der Aussparungen 10 gleich ist. Die Kugelhalbschalen 17, 18 ergeben sich aus einer Kugel mit dem genannten Radius R, mit einer zylindrischen Durchbohrung 19, wobei das Zentrum C der Kugel sich auf der Zylinderachse Z befindet (Teilfiguren 4). Die Kugelhalbschalen 17, 18 ergeben sich durch Halbierung einer durchbohrten Kugel, wobei wiederum die Zylinderachse Z in der Halbierungsfläche F liegt. Der Zylinderdurchmesser ist so ausgewählt, daß das Seil S gerade in dem Ausschnitt hineinpaßt. Zusätzlich wird etwas Materie von dem beiden Halbierungsflächen abgenommen, damit das Seil durch Klemmung zwischen den zwei Klemmbacken eingeklemmt werden kann. Um Seilbeschädigungen zu vermeiden, werden alle Kanten r der Kugelhalbschalen abgerundet (Abrundungsbiegungshalbmesser 2 bzw. 5 mm).

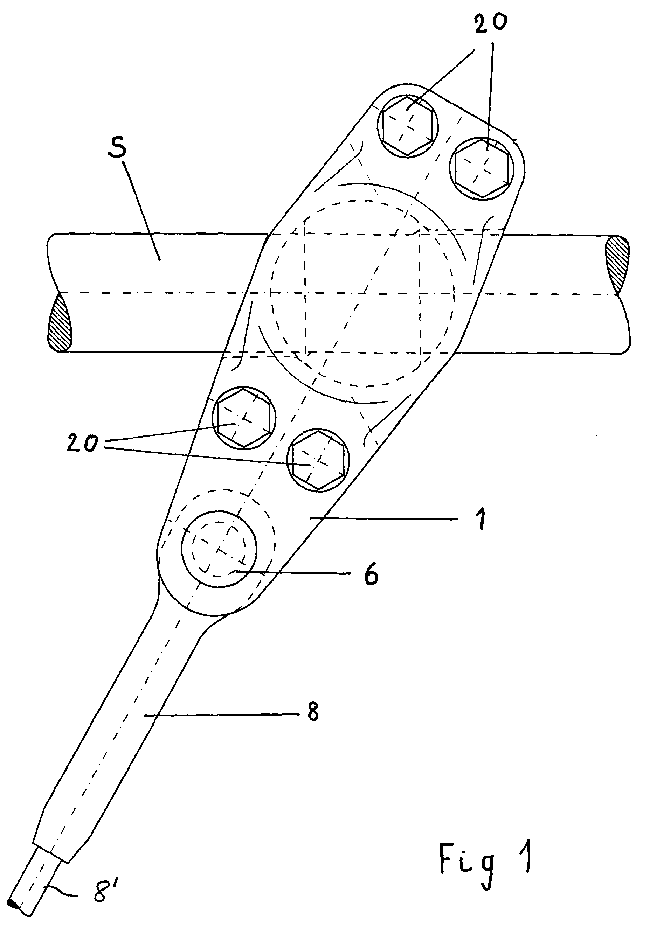

Wie aus den Figuren 1, 2 und 3 ersichtlich ist, werden die Seilklemmschalen 1, 2 mittels vier Klemmschrauben 20 zusammengesetzt. Beim Festdrehen dieser Schrauben 20 entsteht auch die Klemmverbindung zwischen Seil S und Seilklemmbacken 17, 18. Dabei ist das Festdrehen der Schrauben 20 vom Winkel zwischen Seil S und Seilklemme unabhängig.

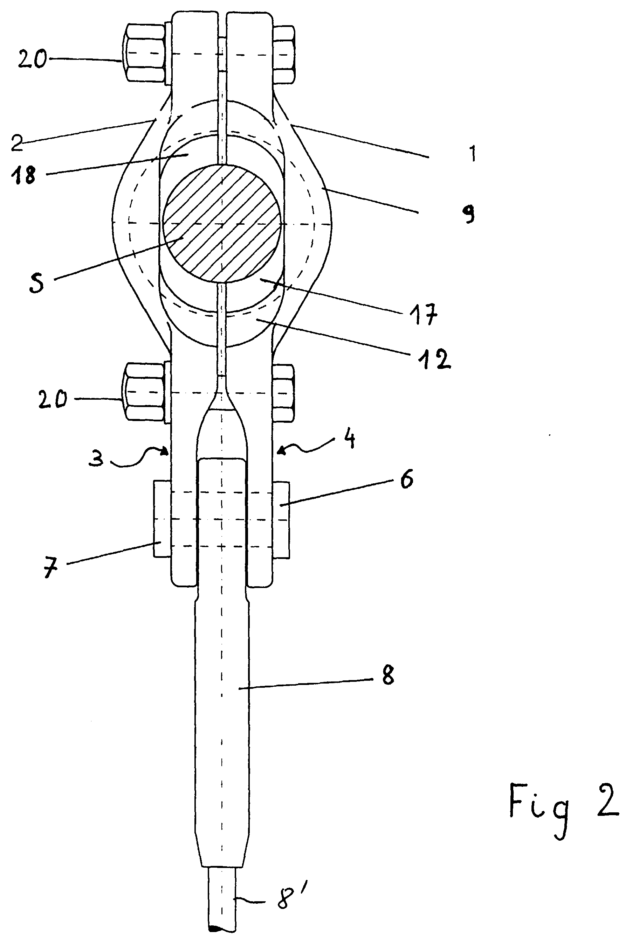

Die Erfindung ist nicht auf die gezeichnete und beschriebene Ausführungsform beschränkt. Wie aus den Figuren 2 und 3 ersichtlich ist, sind die zur Symmetrieebene E der Klemme parallelen Flächen der Ausnehmungen 11, 12 nur wenig mehr als der Seildurchmesser voneinander entfernt. Die Ausnehmungen 11, 12 können auch tiefer sein und diese Flächen können ebenfalls schräg nach außen verlaufen und weiter voneinander entfernt sein.

Die Seilklemme erhält Bewegungsfreiheit, bedingt durch die Kugellagerung der Kugelhalbschalen 17, 18, in einer zur oben beschriebenen Drehungsebene E senkrechten Richtung, also eine begrenzte dreidimensionale Beweglichkeit, die einen Seilschlag des Zugglieds, wenn die Achse des Kauschenspleißes nicht senkrecht zur Ebene E ist, ausgleicht.

Zum Montieren werden zuerst die Kugelhalbschalen bzw. Seilklemmbacken 17, 18 mit den Seilklemmschalen 1, 2 um das Tragseil S gelegt und danach werden die Schraubbolzen 20 etwas angezogen, um eine provisorische Reibschlußverbindung zwischen Seil S und Seilklemmbacken 17, 18 und Seilklemmschalen zu erreichen. Bei Belastung kann sich nun die Seilanordnung bzgl. der Lage der Zugseile 8' mit den Seilklemmen zum Tragseil S dreidimensional winklig ausrichten. Die Seilklemme stellt sich stufenlos auf den Winkel des angreifenden Zugseiles bzw. -gliedes 8' ein. Die Funktionsfähigkeit wird durch Aufbringen der Vorspannkraft erreicht, bei der eine Reibungskraft erreicht ist, die eine Lageverstellung zuläßt. Danach wird die Lage der Seilklemme durch endgültiges Festdrehen der Klemmschrauben 20 fixiert.

Vorteile ergeben sich bei der stufenlosen Verstell- bzw. Ausrichtbarkeit der Seilklemme aus der Eliminierung der Momentenbeanspruchung der Seilklemme und des Tragseiles, sowie den daraus resultierenden Einbußen bzgl. der Dauerstandfestigkeit des Tragseiles. Zusätzliche Belastungen des biegeweichen Tragseiles aus Querpressung und Scherbeanspruchung werden vermieden. Die Bauteile können einer Optimierung unterzogen werden und werden dadurch kompakter und leistungsfähiger, so daß sie hohen architektonischen Ansprüchen gerecht werden.

## Patentansprüche

1. Seilklemme für die Verbindung eines Zuggliedes (8') mit einer vorgegebenen Stelle eines Seiles (S), mit zwei Seilklemmschalen (1, 2), die zwischen sich zwei Seilklemmbacken (17, 18) halten, wobei die Seilklemmbacken (17,18) jeweils einen halbzylindrischen Ausschnitt (19) zur Aufnahme des Seiles (S) an der genannten vorgegebenen Stelle und eine Schwenkachse (6, 7) zur Verbindung mit dem genannten Zugglied (8') aufweisen, **dadurch gekennzeichnet**, daß die Seilklemmbacken durch Kugelhalbschalen (17, 18) gebildet sind, dass jeweils die Längsachse (Z) des genannten halbzylindrischen Ausschnittes (19) in der Halbierungsfläche (F) der Kugelhalbschalen (17, 18) liegt und daß die Seilklemmbacken in biegungshalbmessergleichen kugelkalottenförmigen Aussparungen (10) der Seilklemmschalen (1, 2) einstellbar gelagert sind.

2. Seilklemme nach Anspruch 1, dadurch gekennzeichnet, daß die Seilklemmschalen (1, 2) auf beiden Seiten der kugelkalottenförmigen Aussparungen (10), in Seilrichtung Ausnehmungen (11, 12) aufweisen, die eine stufenlose Verdrehung der Seilklemme in ihrer mittigen Ebene (E) gegenüber dem eingelegten Seil (S), von einer mittleren Position (P) bis zu einem vorgebbaren Winkel (W) erlauben.

3. Seilklemme nach Anspruch 2, dadurch gekennzeichnet, daß die Ausnehmungen (11, 12) durch Anschlagflächen (13, 14, 15, 16) begrenzt sind, die als schräge Ebenen ausgebildet sind und deren Öffnungswinkel dem vorgebbaren Winkel (W) gleich ist.

4. Seilklemme nach Anspruch 2 oder 3, dadurch gekennzeichnet, daß die Ausnehmungen (11, 12) durch abgerundete Anschlagflächen begrenzt sind.

5. Seilklemme nach einem der Ansprüche 2 bis 4, dadurch gekennzeichnet, daß die Tiefe der Ausnehmungen (11, 12) größer ist als der Radius des Seiles (S) und die Ausnehmungen (11, 12) schräg nach außen verlaufen.

6. Seilklemme nach einem der vorhergehenden Ansprüche, dadurch gekennzeichnet, daß die Seilklemmenschalen (1, 2) mittels Klemmschrauben (20) verbindbar sind, deren Festdrehen auch die Klemmverbindung zwischen dem Seil (S) an der vorgegebenen Stelle und den Seilklemmbacken (17, 18) herstellt.

7. Seilklemme nach einem der vorhergehenden Ansprüche, dadurch gekennzeichnet, daß die Seilklemmschalen (1, 2) gegenüberliegende Laschen (3, 4) mit gegenüberliegenden Bohrungen (5) aufweisen, welche die Schwenkachse aufnehmen, und daß die Schwenkachse einen Bolzen (6) und eine Scheibe (7) aufweist.
